# EUROPÄISCHE PATENTSCHRIFT

(11) **EP 3 077 792 B1**
(45) Veröffentlichungstag und Bekanntmachung des Hinweises auf die Patenterteilung: **16.08.2023**
(21) Anmeldenummer: 14808968.3
(22) Anmeldetag: 04.12.2014
(51) Int. Cl.: G01N 21/01, G01N 21/03, G01N 21/25, G01J 3/02, G01N 21/11, G01N 21/64

(54) **MESSKOPF MIT BELEUCHTUNG**
MEASURING HEAD WITH LIGHTING
TÊTE DE MESURE AVEC ÉCLAIRAGE

(30) Priorität: 04.12.2013 DE 102013224846
(43) Veröffentlichungstag der Anmeldung: 12.10.2016
(73) Patentinhaber: Implen GmbH, 81829 München (DE)
(72) Erfinder: SAHIRI, Thomas, Calabasas, California 91302 (US)
(74) Vertreter: Hoffmann Eitle
(86) Internationale Anmeldenummer: PCT/EP2014/076564
(87) Internationale Veröffentlichungsnummer: WO 2015/082611

(56) Entgegenhaltungen:
- EP-A1- 1 743 162
- DE-A1-102005 036 898
- US-A- 6 069 689
- US-A1- 2006 051 036
- US-A1- 2006 109 467
- US-A1- 2007 224 087
- US-A1- 2010 085 571
- FRANCISCO PENA-PEREIRA ET AL: "Advances in miniaturized UV-Vis spectrometric systems", TRAC, TRENDS IN ANALYTICAL CHEMISTRY, Bd. 30, Nr. 10, 2011, Seiten 1637-1648, XP028310104, ISSN: 0165-9936, DOI: 10.1016/J.TRAC.2011.04.018 [gefunden am 2011-08-12]
- Anonymous: "Operating Instructions: DT-1000", FedBizOpps, 27 September 2016 (2016-09-27), XP055453206, Retrieved from the Internet: URL:https://www.usna.edu/Users/physics/van hoy/_files/SP425/LabDocs/Ocean%20Optics%20 2000/Installation%20CD%20071601/Documentat ion/view/Light%20Sources/DT-1000.pdf [retrieved on 2018-02-22]

## Beschreibung

### TECHNISCHES GEBIET

Die vorliegende Erfindung betrifft eine Vorrichtung für die lichtspektroskopische Analyse an einer kleinen Menge einer flüssigen Probe, wobei Licht durch das Medium geführt wird und anschließend photometrisch, spektralphotometrisch, fluorimetrisch und spektralfluorimetrisch detektierbar oder analysierbar ist.

Derartige Vorrichtungen sind beispielsweise aus der EP 1 743 162 B1 oder der DE 10 2005 036898 A1 bekannt. Bei den dort beschriebenen Vorrichtungen wird ein Tropfen bzw. eine kleinste Menge (der Größenordnung von unter 10 Mikrolitern) einer flüssigen Probe auf eine obere Aufnahmestelle aufgebracht. Die Aufnahmestelle ist beispielsweise als flächige Vertiefung ausgestaltet und ist dem kleinen Probenvolumen entsprechend dimensioniert und somit relativ klein. Daher ist es für einen Benutzer oftmals schwierig, die Aufnahmestelle mit bloßem Auge genau zu sehen, was häufig dazu führt, dass die flüssige Probe nur teilweise auf die Aufnahmestelle aufgebracht wird und ein Teil davon außerhalb landet und dadurch einerseits nicht als Analysevolumen zur Verfügung steht und andererseits die Vorrichtung verunreinigt.

Auch in Vorrichtungen wie jenen, die in EP 1 210 579 B1, US 2010/085571 A1 oder dem Artikel von F. Pena-Pereira et al. "Advances in miniaturized UV-Vis spectroscopic systems", TRENDS IN ANALYTICAL CHEMISTRY Bd. 30, Nr. 10, S. 1637-1648 beschrieben sind und bei denen ein Tropfen einer flüssigen Probe zwischen zwei aufeinander zu bewegliche Aufnahmeflächen aufgrund seiner Oberflächenspannung ohne weitere Begrenzung frei gehalten wird, ergibt sich das Problem, dass die den Tropfen aufnehmende Fläche nur schwer mit bloßem Auge erkennbar ist.

Aus dem Stand der Technik, beispielsweise der US 2006/0 051 036 A1 sind faseroptische Endoskope bekannt, die außer der Führung des Anregungslichts für spektroskopische Analysen auch weißes Licht zur Abbildung von endoskopisch zu beobachtendem Gewebe führen. Allerdings sind diese Geräte nicht zur Aufnahme kleinster Flüssigkeitsmengen ausgestaltet, da sie keine entsprechende Aufnahmestelle besitzen und somit auch keine Probeaufnahme ausleuchten können.

### DARSTELLUNG DER ERFINDUNG

Es ist somit Aufgabe der vorliegenden Erfindung, eine gattungsgemäße Vorrichtung für die lichtspektroskopische Analyse einer kleinen Menge einer flüssigen Probe so weiterzubilden, dass die Sichtbarkeit der oberen flächigen Aufnahmestelle verbessert und die Handhabung damit vereinfacht und weniger anfällig für Fehler gemacht wird. Diese Aufgabe wird mithilfe einer Vorrichtung für die lichtspektroskopische Analyse einer kleinen Menge einer flüssigen Probe mit den Merkmalen der Ansprüche 1 bzw. 6 gelöst. Weitere Merkmale und vorteilhafte Ausgestaltungen ergeben sich aus den Unteransprüchen.

Die erfindungsgemäße Vorrichtung für die lichtspektroskopische Analyse einer kleinen Menge einer flüssigen Probe ist in den Ansprüchen 1 und 6 definiert. Gemäß einem ersten Aspekt umfasst sie eine Lichtquelle zur Anregung der Probe, eine Aufnahmestelle in Form einer flächigen Vertiefung an der Oberseite der Vorrichtung zum Aufbringen einer kleinen Menge der flüssigen Probe von unter 10µl Volumen bzw. 10mg Masse, und Lichtleiter, die ausgebildet sind, um Anregungslicht von der Lichtquelle zur Probe und Signallicht aus der Probe zur anschließenden Detektion und Analyse zu leiten, wobei unmittelbar unterhalb der Aufnahmestelle eine Leuchtdiode als Beleuchtungsquelle vorgesehen ist, die eine zur Lichtquelle zusätzliche Lichtquelle ist und nicht der spektroskopischen Anregung dient, und unmittelbar unter der Aufnahmestelle ein Bereich vorgesehen ist, der sich von der Beleuchtungsquelle bis zur Unterseite der Aufnahmestelle erstreckt und für das Licht der Beleuchtungsquelle durchlässig ist, so dass das Beleuchtungslicht die Aufnahmestelle zur besseren Sichtbarkeit und genauen Identifikation der Aufnahmestelle für das menschliche Auge geeignet ausleuchtet, wobei entlang der vertikalen Projektion der Aufnahmestelle kein das Beleuchtungslicht führender Bereich vorhanden ist, und der Bereich, der sich seitlich der genannten Projektion befindet, geeignet ist, das Beleuchtungslicht schräg nach oben zur Aufnahmestelle zu leiten.

Wenn ein Benutzer nun eine kleine Menge, zum Beispiel einen Tropfen, einer flüssigen Probe auf die Aufnahmestelle aufbringen will, wird die Aufnahmestelle, welche eine flächige Vertiefung an der Oberseite der Vorrichtung ist, wie es in der EP 1 743 162 B1 beschrieben ist, oder aber eine feste Fläche in Form eines Ambosses wie in der EP 1 210 579 B1 offenbart, von hinten (unten) beleuchtet, so dass der Benutzer die Aufnahmestelle genau identifizieren kann und beim Auftropfen die Probe mit höherer Sicherheit innerhalb der Begrenzung der Aufnahmestelle aufbringt, so dass einerseits kein Probenvolumen verloren geht und andererseits die Oberseite der Vorrichtung nicht verunreinigt wird. Unter kleinen Mengen sind Probenmengen von unter 10µl Volumen bzw. 10mg Masse zu verstehen, die Probeaufnahmestelle muss daher entsprechend bemessen und konfiguriert sein.

Die Lichtleiter sind hierbei bevorzugt Glasfasern, welche Licht von einer Lichtquelle, wie zum Beispiel einer Xenonlampe, zur Aufnahmestelle führen, so dass das Licht durch die Probe ein erstes Mal durchtreten kann, vom Reflektor reflektiert wird und ein zweites Mal durch die Probe hindurchtreten kann. Das dabei entstehende Signallicht trägt die spektroskopische Signatur der Probe und wird von einem Lichtleiter von der Aufnahmestelle weg zu einem Detektor, beispielsweise einem Spektrometer, geführt.

Die unter der Aufnahmestelle vorgesehene Beleuchtungsquelle ist dabei eine zur Lichtquelle zusätzliche Lichtquelle, welche nicht der spektroskopischen Anregung dient, sondern der für das menschliche Auge geeigneten Ausleuchtung der Aufnahmestelle. Das Beleuchtungslicht tritt hierfür durch einen Bereich unmittelbar unter der Aufnahmestelle hindurch, welcher für das Beleuchtungslicht durchlässig ist, so dass dieses zur Aufnahmestelle gelangen kann. Erfindungsgemäß erstreckt sich dieser Bereich von der Beleuchtungsquelle bis zur Aufnahmestelle bzw. deren Unterseite. Da die Aufnahmestelle für die lichtspektroskopische Analyse transparent sein muss, um sowohl eingehendes Licht als auch Signallicht durchtreten zu lassen, kann so auch das Beleuchtungslicht durch die Aufnahmestelle hindurch gelangen und die Sichtbarkeit der Aufnahmestelle für den Benutzer gewährleisten.

Unter Ausleuchten ist hierbei sowohl das vollständige Ausleuchten der Aufnahmestelle wie auch das teilweise Ausleuchten, beispielsweise nur des Randes der Aufnahmestelle zu verstehen. Zur besseren Sichtbarkeit der Aufnahmestelle ist weiterhin denkbar, dass lediglich die Aufnahmestelle an sich aus transparentem Material hergestellt ist, während das sich seitlich an die Aufnahmestelle anschließende Material, z.B. an der Oberseite der Vorrichtung oder eines Gehäuses oder an den Seiten eines Ambosses, auf dem sich die Aufnahmestelle befindet, nicht optisch transparent ist, beispielsweise geeignet geschwärzt ist.

Im Sinne der Erfindung ist der lichtdurchlässige Bereich unmittelbar unter der Aufnahmestelle angeordnet. Dies schließt sowohl Bereiche unmittelbar vertikal unter der Aufnahmestelle ein, als auch Bereiche, die sich unterhalb aber seitlich versetzt zur Aufnahmestelle befinden. Erfindungsgemäß sind entlang der vertikalen Projektion der Aufnahmestelle keine das Beleuchtungslicht führenden Bereiche vorhanden, beispielsweise weil sich dort Einfalls- und Signallicht
führende Lichtleitfasern befinden, aber die Bereiche, die sich seitlich der genannten Projektion befinden, transparent sind und das Beleuchtungslicht somit schräg nach oben zur Aufnahmestelle leiten.

Bevorzugt umfasst die Vorrichtung weiter einen oberhalb der Aufnahmestelle vorgesehenen, zum Öffnen bzw. Schließen verschwenkbaren bzw. lösbaren Reflektor, wobei sich die Aufnahmestelle in Gebrauchsstellung an der Oberseite der Vorrichtung befindet. Die Vorrichtung kann optional entsprechend auch ein Gehäuse umfassen, an dessen Oberseite sich die Aufnahmestelle in Gebrauchsstellung befindet und an dem der Reflektor verschwenkbar bzw. lösbar vorgesehen ist.

Unter "Gebrauchsstellung" ist dabei die Orientierung der Vorrichtung zu verstehen, bei der zum einen die flüssige Probe auf die Aufnahmestelle aufgebracht bzw. aufgetropft werden kann, zum anderen aber auch die bevorzugte Orientierung, in welcher die Vorrichtung innerhalb eines Spektrometers angeordnet ist. Im Allgemeinen bedeutet dies, dass die beispielsweise längliche Vorrichtung oder deren Gehäuse, an deren/dessen Oberseite die Aufnahmestelle vorgesehen und mit dem verschwenkbaren bzw. lösbaren Reflektor abgedeckt ist, sich in einer aufrechten bzw. vertikalen Orientierung befindet. Der Reflektor ist dabei bevorzugt in einem Deckel eingebaut, der auf die Oberseite der Vorrichtung bzw. des Gehäuses aufsteckbar, aufschraubbar oder über ein Scharnier verschwenkbar angebracht ist, wobei weitere Befestigungsmöglichkeiten, auch unter Zuhilfenahme von Fixierelementen wie Schrauben oder Stiften denkbar sind. Wesentlich ist, dass der Reflektor und ggf. mit ihm der Deckel geöffnet werden kann, um Zugang zur Aufnahmestelle von oben zu erhalten, und geschlossen werden kann, damit der Reflektor mit der Aufnahmestelle ein Probenvolumen bildet, das von der Probenflüssigkeit ausgefüllt wird.

Gemäß einer alternativen Ausgestaltung ist denkbar, dass die Aufnahmestelle eine Aufnahmefläche ist und der Aufnahmefläche gegenüber eine bewegliche Fläche vorgesehen ist, welche sich auf die Aufnahmefläche zubewegen kann, so dass die flüssige Probe zwischen der Aufnahmefläche und der beweglichen Fläche eingelegt wird. Die Aufnahmefläche kann beispielsweise an der Oberseite eines Ambosses angeordnet sein, und ein Lichtleiter kann Licht durch die bewegliche Fläche hindurch zur Probe führen, während ein weiterer Lichtleiter das Signallicht durch die Aufnahmefläche hindurch zum Detektor führt.

Erfindungsgemäß ist die Beleuchtungsquelle eine reale oder virtuelle Lichtquelle. Im Fall der realen Beleuchtungsquelle gemäß Anspruch 1 befindet sich unterhalb der Aufnahmestelle eine direkt lichterzeugende Leuchtdiode (LED), die zum Beispiel im Wesentlichen weißes Licht aussendet, so dass die Aufnahmestelle weiß ausgeleuchtet wird. Ist ein Gehäuse vorgesehen, befindet sich die direkt lichterzeugende Quelle unterhalb der Aufnahmestelle im Gehäuse.

Im Falle einer virtuellen Lichtquelle gemäß Anspruch 6 befindet sich die tatsächliche Lichtquelle, zum Beispiel eine LED, an einer vom Ort unter der Aufnahmestelle, insbesondere an einer vom Gehäuse entfernten Position, und das Beleuchtungslicht der Beleuchtungsquelle wird mithilfe eines Lichtleiters, wie zum Beispiel einer Glasfaser, bis unterhalb der Aufnahmestelle (z.B. in das Gehäuse) geführt, wo das Ende des Lichtleiters die virtuelle Beleuchtungsquelle darstellt.

Besonders bevorzugt ist der lichtdurchlässige Bereich ein transparenter Teil des Gehäuses. Beispielsweise kann hierfür der Bereich des Gehäuses, der die Lichtleiterenden unmittelbar unterhalb der Aufnahmestelle aufnimmt, transparent ausgestaltet sein.

Besonders bevorzugt hierbei ist, dass der lichtdurchlässige Bereich ein sich von der Aufnahmestelle zur Beleuchtungsquelle erstreckendes Glasröhrchen ist. Dieses Röhrchen führt somit das Beleuchtungslicht durch Lichtleitung direkt von der Beleuchtung zur Aufnahmestelle.

Alternativ kann der lichtdurchlässige Bereich auch eine Bohrung sein, deren lichte Weite nicht vollständig von den Lichtleitern ausgefüllt ist. So wird um die Lichtleiter herum Raum geschaffen, durch den das Beleuchtungslicht von unten zur Aufnahmestelle gelangen kann. Im Allgemeinen ist bevorzugt, dass die Beleuchtungsquelle eine unmittelbar unterhalb der Aufnahmestelle (z.B. im Gehäuse) befindliche Leuchtdiode als reale Lichtquelle ist. Die Leuchtdiode kann dabei je nach Bedarf eine unterschiedliche Farbe besitzen, im Allgemeinen wird jedoch Weiß zur Ausleuchtung bevorzugt sein. Ebenso ist denkbar, dass die Leuchtdiode ihre Farbe entsprechend bestimmter Betriebsmodi ändern kann.

In einem zweiten Aspekt ist eine erfindungsgemäße Vorrichtung für die lichtspektroskopische Analyse einer kleinen Menge einer flüssigen Probe vorgesehen, umfassend eine Lichtquelle zur Anregung der Probe, eine Aufnahmestelle zum Aufbringen der flüssigen Probe von unter 10µl Volumen bzw. 10mg Masse, und Lichtleiter, die ausgebildet sind, um Anregungslicht von der Lichtquelle zur Probe und Signallicht aus der Probe zur anschließenden Detektion und Analyse zu leiten, wobei am Eingang des Licht zuführenden Lichtleiters eine Beleuchtungsquelle vorgesehen ist, die eine zur Lichtquelle zusätzliche Lichtquelle ist und nicht der spektroskopischen Anregung dient, welche Beleuchtungslicht in diesen Lichtleiter so einkoppelt, dass der Fokuspunkt des Beleuchtungslichts am Ausgang des Licht zuführenden Lichtleiters außerhalb der Aufnahmestelle bzw, des Probenvolumens in ihr liegt und so die Aufnahmestelle zur besseren Sichtbarkeit und genauen Identifikation der Aufnahmestelle für das menschliche Auge geeignet ausleuchtet. Auf diese Weise kann der das Licht zuführende Lichtleiter doppelt genutzt werden, einmal zum Anregen der Probe in der Aufnahmestelle, und zum anderen zum Ausleuchten der Aufnahmestelle. Zweckmäßig wird hierfür die Beleuchtungsquelle so am Eingang des Lichts zuführenden Lichtleiters angeordnet, dass ihr Fokuspunkt am anderen Endes des Lichtleiters nicht mit jenem der Lichtquelle (welcher innerhalb der Probe in der Aufnahmestelle liegt) zusammenfällt, so
dass das Beleuchtungslicht an der Aufnahmestelle bereits genügend divergiert, um die Aufnahmestelle auszuleuchten.

Bevorzugt umfasst die Vorrichtung weiter einen oberhalb der Aufnahmestelle vorgesehenen, zum Öffnen bzw. Schließen verschwenkbaren bzw. lösbaren Reflektor, wobei sich die Aufnahmestelle in Gebrauchsstellung an der Oberseite der Vorrichtung befindet. Die Vorrichtung kann optional entsprechend auch ein Gehäuse umfassen, an dessen Oberseite sich die Aufnahmestelle in Gebrauchsstellung befindet und an dem der Reflektor verschwenkbar bzw. lösbar vorgesehen ist.

Wie im ersten Aspekt kann alternativ die Aufnahmestelle eine Aufnahmefläche sein und der Aufnahmefläche gegenüber eine bewegliche Fläche vorgesehen sein, welche sich auf die Aufnahmefläche zubewegen kann, so dass die flüssige Probe zwischen der Aufnahmefläche und der beweglichen Fläche eingelegt wird.

Besonders bevorzugt ist am Eingang des das Licht zuführenden Lichtleiters ein faseroptischer Verbinder vorgesehen und die Beleuchtungsquelle unmittelbar am Verbinder angeordnet. Auf diese Weise kann die Beleuchtungsquelle, zum Beispiel eine Leuchtdiode, in den Spalt zwischen der Lichtquelle (zum Beispiel einer Xenonlampe) und dem Faserverbinder (beispielsweise einem SMA-Verbinder) angeordnet sein.

Schließlich sind in einer möglichen Ausführungsform der Vorrichtung die Beleuchtungsquelle und die Lichtquelle integriert bzw. kombiniert. Dies bedeutet, dass mit einer Lichtquelle an sich, z.B. einer kombinierten Halogen/Deuterium-Lampe, sowohl die Beleuchtung der Aufnahmestelle (beispielsweise mittels gedimmter Halogenlampe) als auch die Einstrahlung des Lichts zur Analyse bewirkt wird.

### KURZE BESCHREIBUNG DER ZEICHNUNGEN

Im Folgenden werden zwei Ausführungsbeispiele der vorliegenden Erfindung mit Bezug auf die beigefügten Zeichnungen beschrieben.
- Fig. 1: zeigt eine Schnittansicht einer ersten bevorzugten Ausführungsform der erfindungsgemäßen Vorrichtung, bei welcher eine Leuchtdiode unterhalb der Aufnahmestelle vorgesehen ist; und
- Fig. 2: zeigt eine zweite bevorzugte Ausführungsform der erfindungsgemäßen Vorrichtung, bei der eine Leuchtdiode am Ende der das Licht zuführenden Lichtleitfaser vorgesehen ist.

### DETAILLIERTE BESCHREIBUNG

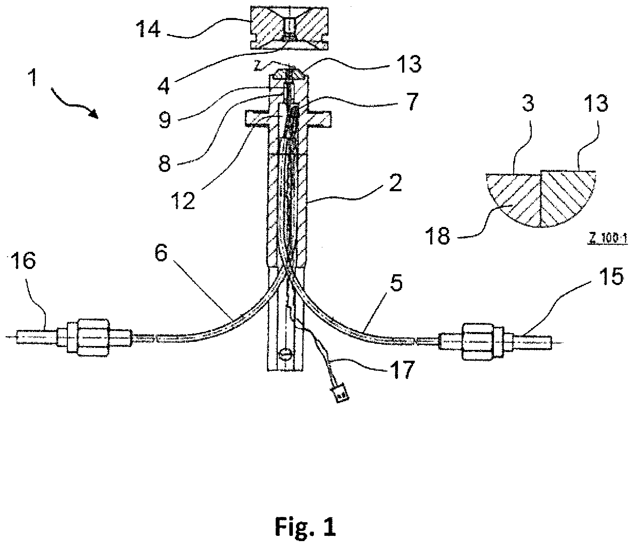

In Figur 1 ist eine Schnittansicht einer ersten bevorzugten Ausführungsform der erfindungsgemäßen Vorrichtung dargestellt. Die Vorrichtung für die lichtspektroskopische Analyse einer kleinen Menge einer flüssigen Probe ist vorliegend ein Messkopf 1, welcher ein längliches Gehäuse 2 umfasst, an dessen Oberseite (in Gebrauchsstellung, d. h. einer vertikalen, aufrechten Orientierung des länglichen Gehäuses 2) sich eine Probenaufnahme 13 befindet. Die Probenaufnahme 13 ist ringförmig ausgebildet und umgibt eine als flächige Vertiefung ausgebildete Aufnahmestelle 3 (siehe die Vergrößerung bei "Z" in Fig. 1). Die Aufnahmestelle ist von oben zugänglich und erlaubt das Aufbringen der flüssigen Probe, welche durch Schwerkraft an der Aufnahmestelle 3 gehalten wird. Der Boden 18 der Aufnahmestelle 3 wird beispielsweise durch ein für das Anregungs- zum Signallicht transparentes Material gebildet, wie zum Beispiel Quarzglas, welches je nach der verwendeten Lichtführung auch Linsenmerkmale besitzen kann, wie es in der EP 1 743 162 B1 beschrieben ist. Die Aufnahmestelle wird nach Aufbringen der Probe von oben mit einem Deckel 14 verschlossen, welcher an seiner Unterseite einen Reflektor 4 aufweist, der die Aufnahmestelle von oben bündig mit der ringförmigen Probenaufnahme abschließt und somit ein definiertes Probenvolumen bildet.

Zur Anregung der Probe wird mithilfe einer Glasfaser 5, welche über einen SMA-Anschluss 15 mit einer (in Fig. 1 nicht dargestellten) Lichtquelle verbunden ist, Licht bis an die Unterseite der Aufnahmestelle geführt. Das Licht durchquert dann das Probenvolumen, wird vom Reflektor 4 reflektiert, durchquert das Probenvolumen erneut und wird anschließend als Signallicht von der Glasfaser 6 zu einem hier ebenfalls nicht gezeigten Detektor, beispielsweise ein Spektrometer, geführt, an welches die Faser 6 über einen SMA-Anschluss 16 angeschlossen wird. Die zur Aufnahmestelle gewandten Enden der Glasfasern 5 und 6 sind in einer Zuführhülse 9 so verklebt, dass das aus ihnen austretende bzw. in sie eintretende Licht jeweils einen idealen Fokuspunkt im Probenvolumen besitzt. Die Glasfasern 5, 6 werden dabei im inneren Hohlraum 12 des Gehäuses 2 geführt.

Unterhalb der Aufnahmestelle befindet sich im oberen Teil des Hohlraums 12 des Gehäuses 2 eine Leuchtdiode 7, deren Stromversorgung über ein Versorgungskabel 17 mit entsprechendem Stecker gewährleistet wird, das ebenfalls durch den Hohlraum 12 des Gehäuses 2 geführt ist. Das von der LED 7 abgestrahlte Licht kann dabei durch einen transparenten Bereich 8, der vorliegend als die Zuführhülse 9 umgebendes Glasröhrchen 8 ausgestaltet ist, bis an die Unterseite der Aufnahmestelle 3 gelangen und so die Aufnahmestelle von unten ausleuchten. Im vorliegenden Ausführungsbeispiel tritt also das Beleuchtungslicht aus der LED 7 in das Glasröhrchen 8 ein, welches das Beleuchtungslicht zum Boden 18 in der Aufnahmestelle 3 und somit zu deren Unterseite leitet.

Alternativ ist es auch denkbar, die Zuführhülse 9 der Lichtleitfasern 5, 6 transparent zu gestalten und als transparenter Bereich für die Lichtleitung des Beleuchtungslichts zur Aufnahmestelle 3 einzusetzen. Eine eventuelle Streuung des Beleuchtungslichts in die Lichtleitfasern 5, 6 ist dabei unkritisch, da die Beleuchtung bei der Messung abgeschaltet wird, wie im Folgenden noch erläutert wird.

Obwohl es in Figur 1 nicht dargestellt ist, kann weiterhin ein Schaltmechanismus vorgesehen sein, welcher die Beleuchtung durch die LED 7 nur bei abgenommenem Deckel 14 einschaltet und die LED 7 automatisch deaktiviert, nachdem der Deckel 14 mit dem Reflektor 4 auf die Aufnahmestelle 3 aufgesetzt, d. h. verschlossen wurde. Somit ist die Beleuchtung bei geschlossenem Deckel und insbesondere während der Messungen abgeschaltet, und jegliche Beeinträchtigung der Messergebnisse wird wirkungsvoll verhindert.

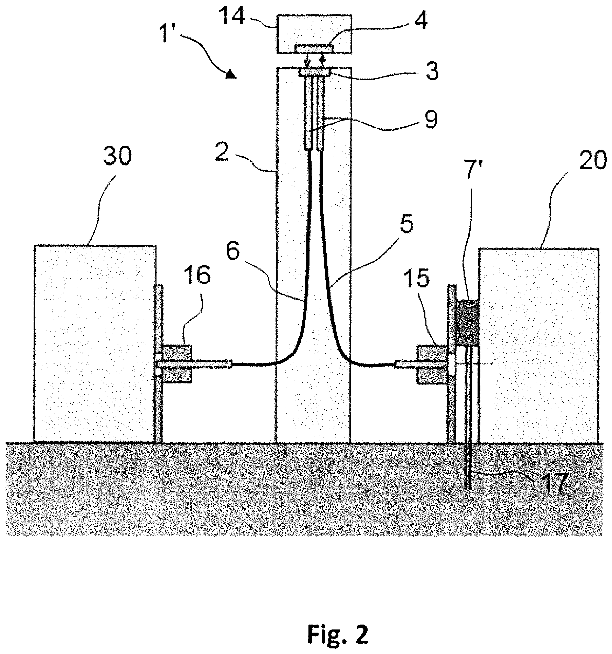

In Figur 2 ist eine zweite bevorzugte Ausführungsform der vorliegenden Erfindung gezeigt. Hierbei ist die Vorrichtung zur lichtspektroskopischen Analyse einer kleinen Menge einer flüssigen Probe ein Messkopf 1', der im Wesentlichen der Ausführungsform der Figur 1 entspricht. Allerdings ist vorliegend keine LED unterhalb der Aufnahmestelle 3 vorgesehen, ebenso wenig wie ein das Beleuchtungslicht durchlässiger Bereich wie in der ersten Ausführungsform. Stattdessen ist vorliegend eine Leuchtdiode oder eine Halogenlampe 7' als Beleuchtungslichtquelle zwischen einem faseroptischen Verbinder 15 der das Licht zur Aufnahmestelle führenden Lichtleitfaser 5 und einer Xenonlampe 20, welche die Lichtquelle darstellt, angeordnet und über eine Stromversorgungleitung 17 angeschlossen. Das Licht der LED 7' wird dabei in die Lichtleiterfaser 5 eingekoppelt und zur Aufnahmestelle 3 geführt. Hierbei wird das Licht der LED oder Halogenlampe 7' so eingekoppelt, dass der Fokuspunkt des Beleuchtungslichts am anderen Ende der Faser 5 außerhalb der Aufnahmestelle 3 bzw. des Probenvolumens in ihr liegt, so dass der Beleuchtungslichtstrahl an der Aufnahmestelle 3 bereits genügend divergiert, um die Aufnahmestelle 3 auszuleuchten.

Wie in der ersten Ausführungsform wird bei der Messung, d. h. bei aufgesetztem Deckel 14, die LED 7' abgeschaltet, so dass weder das Anregungsglicht noch das Signallicht, welches durch die Glasfaser 6 über einen SMA-Anschluss 16 in das Spektrometer (Detektor) 30 gekoppelt wird, nicht negativ beeinträchtigt wird.

## Patentansprüche

1. Vorrichtung (1) für die lichtspektroskopische Analyse einer kleinen Menge einer flüssigen Probe, umfassend:
eine Lichtquelle zur Anregung der Probe;
eine Aufnahmestelle (3) in Form einer flächigen Vertiefung an der Oberseite der Vorrichtung oder einer festen Fläche in Form eines Ambosses, die zum Aufbringen einer kleinen Menge der flüssigen Probe von unter 10µl Volumen bzw. 10mg Masse bemessen und konfiguriert ist, und
Lichtleiter (5, 6), die ausgebildet sind, um Anregungslicht von der Lichtquelle zur Probe und Signallicht aus der Probe zur anschließenden Detektion und Analyse zu leiten,
**dadurch gekennzeichnet, dass** unmittelbar unterhalb der Aufnahmestelle (3) eine Leuchtdiode als Beleuchtungsquelle (7) vorgesehen ist, die eine zur Lichtquelle zusätzliche Lichtquelle ist und nicht der spektroskopischen Anregung dient, und unmittelbar unter der Aufnahmestelle (3) ein Bereich (8) vorgesehen ist, der sich von der Beleuchtungsquelle (7) bis zur Unterseite der Aufnahmestelle (3) erstreckt und für das Licht der Beleuchtungsquelle (7) durchlässig ist, so dass das Beleuchtungslicht die Aufnahmestelle (3) zur besseren Sichtbarkeit und genauen Identifikation der Aufnahmestelle (3) für das menschliche Auge geeignet ausleuchtet,
wobei entlang der vertikalen Projektion der Aufnahmestelle (3) kein das Beleuchtungslicht führender Bereich vorhanden ist, und der Bereich, der für das Licht der Beleuchtungsquelle (7) durchlässig ist, sich seitlich der genannten Projektion befindet und geeignet ist, das Beleuchtungslicht schräg nach oben zur Aufnahmestelle (3) zu leiten

2. Vorrichtung (1) nach Anspruch 1, weiter umfassend:
einen oberhalb der Aufnahmestelle (3) vorgesehenen, zum Zugänglichmachen der Aufnahmestelle (3) verschwenkbaren oder lösbaren Reflektor (4), wobei sich die Aufnahmestelle (3) in Gebrauchsstellung an der Oberseite der Vorrichtung (1) befindet

3. Vorrichtung (1) nach Anspruch 1, wobei die Aufnahmestelle (3) eine Aufnahmefläche ist und der Aufnahmefläche gegenüber eine bewegliche Fläche vorgesehen ist, welche sich auf die Aufnahmefläche zubewegen kann, so dass die flüssige Probe zwischen der Aufnahmefläche und der beweglichen Fläche eingelegt wird.

4. Vorrichtung (1) nach einem der Ansprüche 1 bis 3, wobei der lichtdurchlässige Bereich (8) ein sich von der Aufnahmestelle (3) zur Beleuchtungsquelle (7) erstreckendes Glasröhrchen ist.

5. Vorrichtung (1) nach einem der Ansprüche 1 bis 3, wobei der lichtdurchlässige Bereich (8) eine Bohrung ist, deren lichte Weite nicht vollständig von den Lichtleitern (5, 6) ausgefüllt ist.

6. Vorrichtung (1') für die lichtspektroskopische Analyse einer kleinen Menge einer flüssigen Probe, umfassend:
eine Lichtquelle (20) zur Anregung der Probe;
eine Aufnahmestelle (3), die zum Aufbringen einer kleinen Menge der flüssigen Probe von unter 10µl Volumen bzw. 10mg Masse bemessen und konfiguriert ist, und
Lichtleiter (5, 6), die ausgebildet sind, um Anregungslicht von der Lichtquelle (20) zur Probe und Signallicht aus der Probe zur anschließenden Detektion und Analyse zu leiten,
**dadurch gekennzeichnet, dass** am Eingang des Licht zuführenden Lichtleiters (5) eine Beleuchtungsquelle (7') vorgesehen ist, die eine zur Lichtquelle (20) zusätzliche Lichtquelle ist und nicht der spektroskopischen Anregung dient, welche Beleuchtungslicht in diesen Lichtleiter (5) so einkoppelt, dass der Fokuspunkt des Beleuchtungslichts am Ausgang des Licht zuführenden Lichtleiters (5) außerhalb der Aufnahmestelle (3) bzw. des Probenvolumens in ihr liegt und so die Aufnahmestelle (3) zur besseren Sichtbarkeit und genauen Identifikation der Aufnahmestelle für das menschliche Auge geeignet ausleuchtet.

7. Vorrichtung (1') nach Anspruch 6, weiter umfassend:
einen oberhalb der Aufnahmestelle (3) vorgesehenen, zum Zugänglichmachen der Aufnahmestelle (3) verschwenkbaren oder lösbaren Reflektor (4), wobei sich die Aufnahmestelle (3) in Gebrauchsstellung an der Oberseite der Vorrichtung befindet.

8. Vorrichtung (1') nach Anspruch 7, wobei die Aufnahmestelle (3) eine Aufnahmefläche ist und der Aufnahmefläche gegenüber eine bewegliche Fläche vorgesehen ist, welche sich auf die Aufnahmefläche zubewegen kann, so dass die flüssige Probe zwischen der Aufnahmefläche und der beweglichen Fläche eingelegt wird.

9. Vorrichtung (1') nach Anspruch 6, 7 oder 8, wobei am Eingang des das Licht zuführenden Lichtleiters (5) ein faseroptischer Verbinder (15) vorgesehen ist und die Beleuchtungsquelle (7') unmittelbar am Verbinder angeordnet ist.

10. Vorrichtung (1') nach einem der Ansprüche 6 bis 9, wobei die Beleuchtungsquelle (7') und die Lichtquelle (20) integriert bzw. kombiniert sind.

## Claims

1. A device (1) for the light spectroscopic analysis of a small amount of a liquid sample, comprising:
a light source for excitation of the sample;
a receiving point (3) in the form of a two-dimensional indentation on the upper side of the device, or of a solid surface in the form of an anvil, which is dimensioned and configured for the application of a small amount of the liquid sample of less than 10 µl volume or 10 mg mass, and
light conductors (5, 6) which are configured to input excitation light from the light source to the sample and to output signal light from the sample towards subsequent detection and analysis,
**characterized in that** a light-emitting diode is provided directly below the receiving point (3) as illumination source (7) which is a source of light in addition to the light source and is not used for spectroscopic excitation, and a region (8) is provided directly below the receiving point (3) which extends from the illumination source (7) to the lower side of the receiving point (3) and is transmissive to the light of the illumination source (7) so that the illumination light illuminates the receiving point (3) properly for the human eye for better visibility and more precise identification of the receiving point (3),
wherein along the vertical projection of the receiving point (3) there is no region guiding the illumination light, and the region which is transmissive for the light of the illumination source (7) is located laterally of said projection and is suitable to guide the illumination light obliquely upwards to the receiving point (3).

2. The device (1) according to claim 1, further comprising:
a reflector (4) provided above the receiving point (3) so as to be swivelable or detachable in order to make the receiving point (3) accessible, in the position of use the receiving point (3) being located on the upper side of the device (1).

3. The device (1) according to claim 1, the receiving point (3) being a receiving surface, and a moveable surface being provided opposite the receiving surface, which moveable surface can move towards the receiving surface so that the liquid sample is inserted between the receiving surface and the moveable surface.

4. The device (1) according to any of claims 1 to 3, the light-transmissive region (8) being a glass tube that extends from the receiving point (3) to the illumination source (7).

5. The device (1) according to any of claims 1 to 3, the light-transmissive region (8) being a bore, the clear diameter of which is not entirely filled by the light conductors (5, 6).

6. A device (1') for the light spectroscopic analysis of a small amount of a liquid sample, comprising:
a light source (20) for excitation of the sample;
a receiving point (3) which is dimensioned and configured for the application of a small amount of the liquid sample of less than 10 µl volume or 10 mg mass, and
light conductors (5, 6) which are configured to input excitation light from the light source (20) to the sample and to output signal light from the sample towards subsequent detection and analysis,
**characterized in that**, at the entrance of the light conductor (5) inputting the light, an illumination source (7') is provided which is a source of light in addition to the light source and is not used for spectroscopic excitation, which injects illumination light into this light conductor (5) so that the focal point of the illumination light at the other end of the light-inputting light conductor (5) lies outside of the receiving point (3) or the sample volume within it and so illuminates the receiving point (3) properly for the human eye for better visibility and more precise identification of the receiving point.

7. The device (1') according to claim 6, further comprising:
a reflector (4) provided above the receiving point (3) so as to be swivelable or detachable in order to make the receiving point (3) accessible, in the position of use the receiving point (3) being located on the upper side of the device (1).

8. The device (1') according to claim 7, the receiving point (3) being a receiving surface, and a moveable surface being provided opposite the receiving surface, which moveable surface can move towards the receiving surface so that the liquid sample is inserted between the receiving surface and the moveable surface.

9. The device (1') according to claim 6, 7 or 8, a fiber optic connector (15) being provided at the entrance of the light conductor (5) inputting the light, and the illumination source (7') being disposed directly at the connector.

10. The device (1') according to any of claims 6 to 9, the illumination source (7') and the light source (20) being integrated or combined.

## Revendications

1. Dispositif (1) pour l'analyse par spectroscopie optique d'une petite quantité d'un échantillon liquide, comprenant :
une source de lumière pour l'excitation de l'échantillon ;
un point de réception (3) sous la forme d'une cavité plane au niveau du côté supérieur du dispositif ou d'une surface fixe sous la forme d'une enclume, qui est dimensionné et configuré pour l'application d'une petite quantité de l'échantillon liquide de moins de 10 µl en volume ou 10 mg en masse, et
des guides de lumière (5, 6) qui sont réalisés afin de guider de la lumière d'excitation de la source de lumière à l'échantillon et de la lumière de signal depuis l'échantillon pour la détection et l'analyse consécutives,
**caractérisé en ce que** directement en dessous du point de réception (3), une diode électroluminescente est prévue comme source d'éclairage (7), laquelle est une source de lumière supplémentaire à la source de lumière et ne sert pas à l'excitation spectroscopique, et directement en dessous du point de réception (3), une zone (8) est prévue, laquelle s'étend de la source d'éclairage (7) jusqu'au côté inférieur du point de réception (3) et est perméable à la lumière de la source d'éclairage (7) de sorte que la lumière d'éclairage éclaire de manière appropriée le point de réception (3) pour une meilleure visibilité et identification précise du point de réception (3) pour l'œil humain,
dans lequel le long de la projection verticale du point de réception (3), aucune zone guidant la lumière d'éclairage n'est présente, et la zone qui est perméable à la lumière de la source d'éclairage (7), se trouve sur le côté de la projection citée et est appropriée afin de conduire la lumière d'éclairage en biais vers le haut au point de réception (3).

2. Dispositif (1) selon la revendication 1, comprenant en outre :
un réflecteur (4) prévu au-dessus du point de réception (3), détachable ou pivotant pour rendre accessible le point de réception (3), dans lequel le point de réception (3) se trouve en position d'utilisation au niveau du côté supérieur du dispositif (1).

3. Dispositif (1) selon la revendication 1, dans lequel le point de réception (3) est une surface de réception et une surface mobile est prévue en face de la surface de réception, laquelle peut se déplacer vers la surface de réception de sorte que l'échantillon liquide soit inséré entre la surface de réception et la surface mobile.

4. Dispositif (1) selon l'une quelconque des revendications 1 à 3, dans lequel la zone perméable à la lumière (8) est un petit tube de verre s'étendant depuis le point de réception (3) à la source d'éclairage (7).

5. Dispositif (1) selon l'une quelconque des revendications 1 à 3, dans lequel la zone perméable à la lumière (8) est un perçage, dont la largeur intérieure n'est pas complètement remplie par les guides de lumière (5, 6).

6. Dispositif (1') pour l'analyse par spectroscopie optique d'une petite quantité d'un échantillon liquide, comprenant :
une source de lumière (20) pour l'excitation de l'échantillon ;
un point de réception (3) qui est dimensionné et configuré pour l'application d'une petite quantité de l'échantillon liquide de moins de 10 µl en volume ou 10 mg en masse, et
des guides de lumière (5, 6) qui sont réalisés afin de conduire de la lumière d'excitation de la source de lumière (20) à l'échantillon et de la lumière de signal depuis l'échantillon pour la détection et l'analyse consécutives,
**caractérisé en ce qu'**une source d'éclairage (7') est prévue au niveau de l'entrée du guide de lumière (5) acheminant de la lumière, laquelle est une source de lumière supplémentaire à la source de lumière (20) et ne sert pas à l'excitation spectroscopique, laquelle injecte de la lumière d'éclairage dans ce guide de lumière (5) de sorte que le point focal de la lumière d'éclairage se trouve au niveau de la sortie du guide de lumière (5) acheminant de la lumière en dehors du point de réception (3) ou du volume d'échantillon en lui et éclaire ainsi de manière appropriée le point de réception (3) pour une meilleure visibilité et identification précise du point de réception (3) pour l'œil humain.

7. Dispositif (1') selon la revendication 6, comprenant en outre :
un réflecteur (4) prévu au-dessus du point de réception (3), détachable ou pivotant pour rendre accessible le point de réception (3), dans lequel le point de réception (3) se trouve en position d'utilisation au niveau du côté supérieur du dispositif.

8. Dispositif (1') selon la revendication 7, dans lequel le point de réception (3) est une surface de réception et une surface mobile est prévue en face de la surface de réception, laquelle peut se déplacer vers la surface de réception de sorte que l'échantillon liquide soit inséré entre la surface de réception et la surface mobile.

9. Dispositif (1') selon la revendication 6, 7 ou 8, dans lequel un connecteur (15) à fibre optique est prévu au niveau de l'entrée du guide de lumière (5) acheminant la lumière et la source d'éclairage (7') est directement agencée au niveau du connecteur.

10. Dispositif (1') selon l'une quelconque des revendications 6 à 9, dans lequel la source d'éclairage (7') et la source de lumière (20) sont intégrées ou combinées.
